# EUROPEAN PATENT APPLICATION

(11) **EP 4 807 566 A2**
(43) Date of publication of application: **16.09.2026**
(21) Application number: 26154118.9
(22) Date of filing: 26.01.2026
(51) Int. Cl.: G06F 11/3668

(54) **MODEL COVERAGE ANALYSIS ON USER APPLICATION DEFINITION FILES**

(30) Priority: 19.02.2025 IN 202511014235; 29.04.2025 US 202519192676
(71) Applicant: Honeywell International Inc., Charlotte, NC 28202 (US)
(72) Inventor: NALLASINGAM, Patchaiappan, Charlotte, 28202 (US); RAB, Abdur, Charlotte, 28202 (US); NARESH, Bojanapu, Charlotte, 28202 (US); RAVINDRANATH, Balasubramanyam, Charlotte, 28202 (US); KUMAR, Prem, Charlotte, 28202 (US)
(74) Representative: Haseltine Lake Kempner LLP

(57) **Abstract**

Systems and methods for model coverage analysis on user application definition files are described herein. In certain embodiments, a system includes one or more memory devices and one or more processors. Further, the processors are configured to execute a qualified tool, wherein the qualified tool is configured to generate a binary model file from a design model. Additionally, the processors are configured to perform a model coverage test of the design model. Also, the processors are configured to log accessed data from the binary model file into a logged binary file. Moreover, the processors are configured to access the binary model file and the logged binary file. Further, the processors are configured to perform a comparison of the binary model file to the logged binary file. Also, the processors are configured to generate a coverage report based on the comparison of the binary model file to the logged binary file.

## Description

### CROSS-REFERENCE TO RELATED APPLICATION

This application claims priority to Indian Provisional Patent Application No. 202511014235 filed on February 19, 2025, the contents of which are incorporated herein by reference in their entirety.

### BACKGROUND

In software development, a design model defines a representation of the software architecture, including the components, interactions, and behaviors of the software. The design model can provide a blueprint for implementing the software components and is a crucial artifact in the software development lifecycle. In particular, design models are crucial in safety-critical domains like aviation to ensure that software functions as designed.

Often, modeled software may model user interfaces, and the modeled user interfaces may be subject to industry standards. For example, ARINC 661 is a standard for describing user interfaces in cockpit display systems (CDS). In particular, ARINC 661-compliant CDS displays Graphical User Interfaces (GUIs), which are specified in binary files called definition files (DFs) and communicate with user applications (UAs). Often, GUIs that comply with industry standards are defined through the hierarchical composition of individual elements called widgets. These widgets may be picked from a collection of elements defined as part of a software widget library. For example, for CDS software, the widget library may have a widget library defining elements associated with a CDS.

### SUMMARY

Systems and methods for model coverage analysis on user application definition files are described herein. In certain embodiments, a system includes one or more memory devices and one or more processors. Further, the one or more processors are configured to execute a qualified tool, wherein the qualified tool is configured to generate a binary model file from a design model. Additionally, the one or more processors are configured to perform a model coverage test of the design model. Also, the one or more processors are configured to log accessed data from the binary model file into a logged binary file. Moreover, the one or more processors are configured to access the binary model file and the logged binary file. Further, the one or more processors are configured to perform a comparison of the binary model file to the logged binary file. Also, the one or more processors are configured to generate a coverage report based on the comparison of the binary model file to the logged binary file.

### BRIEF DESCRIPTION OF THE DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:
FIG. 1 is a flow diagram illustrating a typical approach for performing model coverage analysis;
FIG. 2 is a flow diagram illustrating a typical approach for performing test evaluations;
FIG. 3 is a diagram illustrating rationales for using DF binary files when performing model coverage analysis according to an aspect of the present disclosure;
FIG. 4 is a diagram for generating binary data files from a data file model according to an aspect of the present disclosure;
FIG. 5 is a flow diagram of an approach for evaluating model coverage of UA DF models according to an aspect of the present disclosure;
FIG. 6 is a flowchart diagram of a method for generating a logged DF binary according to an aspect of the present disclosure;
FIG. 7 is a flowchart diagram of a method for creating a logged DF binary and human-readable data according to an aspect of the present disclosure;
FIG. 8 is a block diagram of a binary file data compare utility according to an aspect of the present disclosure;
FIG. 9 is a flowchart diagram of a method performed by a binary file data compare utility according to an aspect of the present disclosure;
FIG. 10 is a block diagram of a binary file block data compare utility according to an aspect of the present disclosure;
FIG. 11 is a flowchart diagram of a method performed by the binary file block data compare utility according to an aspect of the present disclosure;
FIG. 12 is a flowchart diagram of a method for performing model coverage analysis according to an aspect of the present disclosure; and
FIG. 13 is a flowchart diagram of a method for performing model coverage analysis according to an aspect of the present disclosure.

Per common practice, the drawings do not show the various described features according to scale, but the drawings show the features to emphasize the relevance of the features to the example embodiments.

### DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

Implemented deployed user interfaces and the modeled user interfaces may be subject to industry standards. For example, the ARINC 661 standard applies to implementing user interfaces in CDS. As part of creating ARINC 661-compliant CDS, displayed GUIs are specified in binary files called DFs. These GUIs communicate the information stored in the DFs with UAs. Often, software development projects (including projects developed for next-generation avionics) implement UA DF models that are considered part of design models. These UA DF models may be converted into binary DF files known as parameter data items (PDIs) using UA DF generator tools. The DO-331 guidelines consider the UA DF models to be part of design models and are subject to model coverage requirements.

Accordingly, the DO-331 guidelines call for model coverage analysis that determines which low-level requirements expressed by a model are not exercised through a verification process based on the high-level requirements from which the model was developed. The analysis may help detect unintended functionality in the design model or employed in the software. This model coverage analysis is often performed using requirements-based verification cases using the requirements in a software specification from which the associated design model was developed. The analysis is intended to confirm the degree of coverage in accordance with defined coverage criteria for the design model based on different verification cases. Additional verification cases may be defined to ensure model coverage for derived requirements.

However, when PDIs are generated using a qualified tool, there are no methods or tools that can perform model coverage for the design model from which the PDI binary file is generated. As used herein, a qualified tool may refer to a software application or platform that has been evaluated, tested, and approved for use in specific contexts subject to regulatory compliance. Systems and methods described herein are capable of performing model coverage analysis for PDI binary files. Additionally, systems described herein can provide evidence that justifies requirements-based testing that exercises model coverage through qualified and unqualified tools.

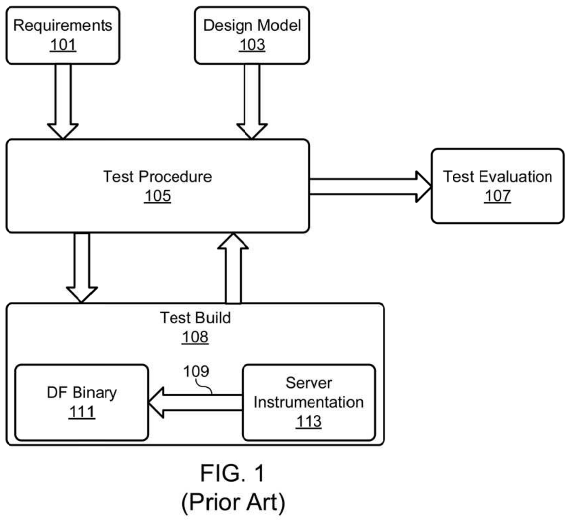

FIG. 1 is a flow diagram illustrating a typical approach for testing a UA DF binary file while performing model coverage analysis on developed applications. When performing model coverage analysis, a test procedure 105 is developed to ensure that a design model 103 covers the defined requirements 101. A design model 103 is said to cover the defined requirements 101 when the elements in the design model 103 are traceable to a requirement in the defined requirements 101 and each requirement in the defined requirement 101 is traceable to one or more elements of the design model 103. Accordingly, a test procedure 105 is designed to verify that the design model 103 covers the defined requirements 101. Further, the defined requirements 101 may be defined within software specifications and may include both system-level requirements and/or high-level requirements. Frequently, a test procedure 105 includes multiple test cases that are designed from the defined requirements 101 to ensure that each requirement is properly exercised and that the design model 103 does not include functionality that is not associated with the defined requirements 101.

When creating the design model 103, data files are often created. These data files are then converted into a DF binary 111 using a DF generator tool that may be a qualified tool or a non-qualified tool. The DF binary 111 may be a PDI binary file or other type of file created by the DF generator tool. As part of performing the model coverage analysis, a test procedure 105 is often required to justify that the DF binary 111 generated by a generator tool from the design model 103 covers the defined requirements 101 from a software specification. As defined herein, a qualified tool is a DF generator tool that has been validated or certified against industry standards, regulatory requirements, or a quality assurance program. A non-qualified tool is a DF generator tool that has not been subjected to validation or certification.

In typical implementations, to perform the model coverage analysis, the test procedure 105 sends simulated input data to a test build 108 that provides the input data to the DF binary 111. Further, the test build 108 may incorporate server instrumentation 113 that is used by the test build 108 in conjunction with the simulated input data to execute the DF binary 111 and provide a test response to the test procedure 105. For example, the server instrumentation 113 may read 109 data in the DF binary 111 to generate the test results and provide them back to the test procedure 105. In response to receiving the results from the test build 108, the test procedure 105 may capture the test results and provide them to a system for test evaluation 107, where the test evaluation 107 evaluates the test results from the test procedure 105 to determine the model coverage.

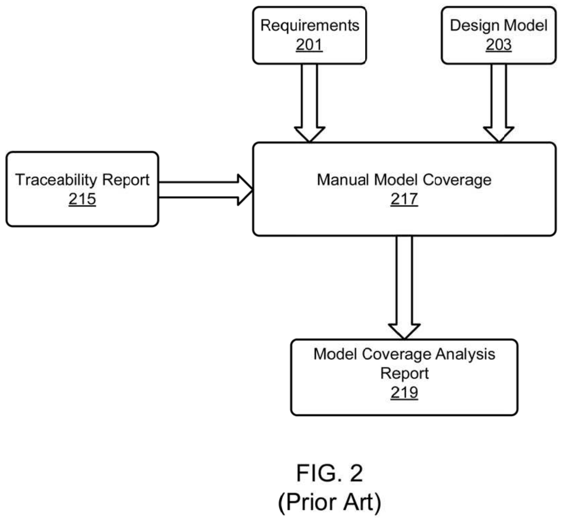

FIG. 2 is a flow diagram illustrating a typical approach for performing the test evaluation 107 in FIG. 1. For example, the test results may be provided to a manual model coverage evaluator 217 that is configured to analyze the test results received from the test procedure 105 to ensure coverage of the design model 203 against the defined requirements 201, where the defined requirements 201 and the design model 203 are similar to the defined requirements 101 and design model 103. For example, the manual model coverage evaluator 217 may receive the test results as a traceability report 215, where the traceability report 215 traces data and function calls based on the test cases and procedures. From the traceability report 215, the manual model coverage evaluator 217 is able to generate a manual model coverage analysis report 219. However, the manual model coverage evaluator 217 may be unable to provide justification that requirements-based testing has exercised model coverage when the DF binary files are generated with qualified tools.

User application definition file UA DF models are considered to be part of the design model for a developed application and are generated based on the requirements used to create the associated design models. Accordingly, UA DF models are considered part of the design model. Often, they are created using software tools from high-level software or system requirements. Further, qualified tools are often used to generate DF binary files, though non-qualified tools may be used as well. During the model coverage analysis, binary code coverage metrics may be collected to show that the UA DF correctly provides coverage for the design model with regard to the requirements 201.

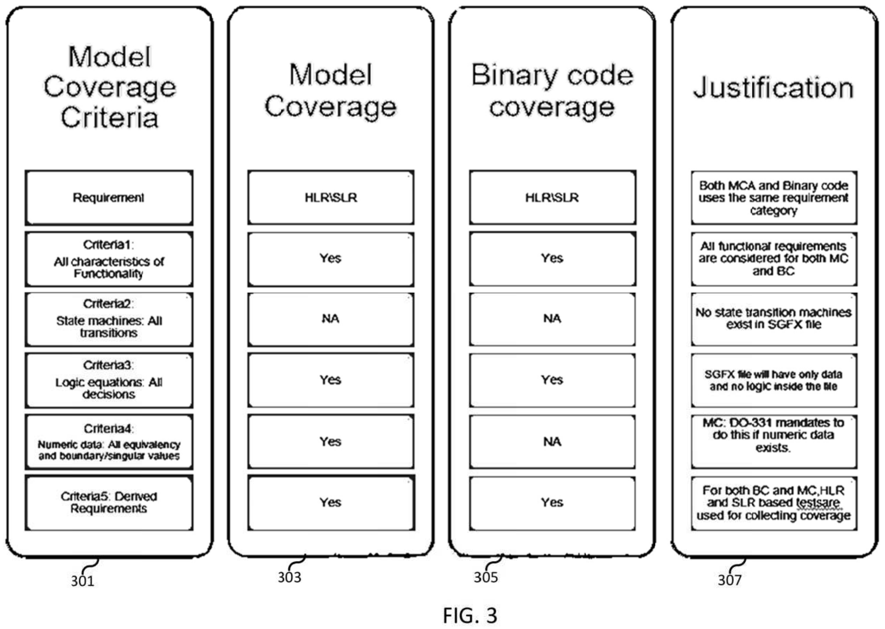

FIG. 3 is a diagram illustrating rationales for using the DF binary files for performing model coverage analysis. As illustrated, the diagram shows model coverage criteria 301, how the model coverage criteria apply to model coverage 303 and binary code coverage 305, along with justifications 307 for the applicability of the model coverage 303 and binary code coverage 305 to the associated criteria in the model coverage criteria 301.

As shown, the model coverage criteria 301 specifies requirements for ensuring model coverage. The justifications 307 states that the model coverage 303 and binary code coverage 305 for data files are applicable to the coverage requirements 303 because both model coverage analysis and binary code coverage use the same requirement category, which includes high-level and system-level requirements that dictate the information in the data files. Additionally, the model coverage criteria 301 specifies a first criteria that calls for all characteristics of functionality, wherein every characteristic of the model is evaluated to ensure that it performs as expected. The justification 307 for this criteria applies to the model coverage 303 and the binary code coverage 305 as all the functional requirements are considered for both the model coverage 303 and the binary code coverage 305 during testing.

Further, the model coverage criteria 301 specifies a second criteria that call for all transitions for state machines. However, as data files generally represent information that represents structural or other static information, the second criteria does not apply to the model coverage 303 and binary code coverage 305 for data files. In particular, the justification 307 states that the data files lack state transition machines. Moreover, the model coverage criteria 301 specifies a third criteria that evaluates the decision making process of an application. As the data files specify data that can affect various logic decisions, both model coverage 303 and binary code coverage 305 are applicable as the justification 307 indicates that both the data files and binary files from the data files contain data that may be used when making logic decisions.

Also, the model coverage criteria 301 may include a fourth criteria regarding numeric data for evaluating equivalence and boundary/singular values. This criteria applies to model coverage 303 but not to binary code coverage 305. The justification 307 for this is due to requirements that mandate evaluating model coverage if numeric data exists. Additionally, the model coverage criteria 301 may include a fifth criteria regarding derived requirements. The application of derived requirements is shown in the justification 308 for both the binary code coverage 305 and model coverage 303 as the derived requirements are derived from the high-level and system-level requirements, and accordingly, coverage for the data files derived from the derived requirements are also evaluated to ensure model coverage 303 and binary code coverage 305.

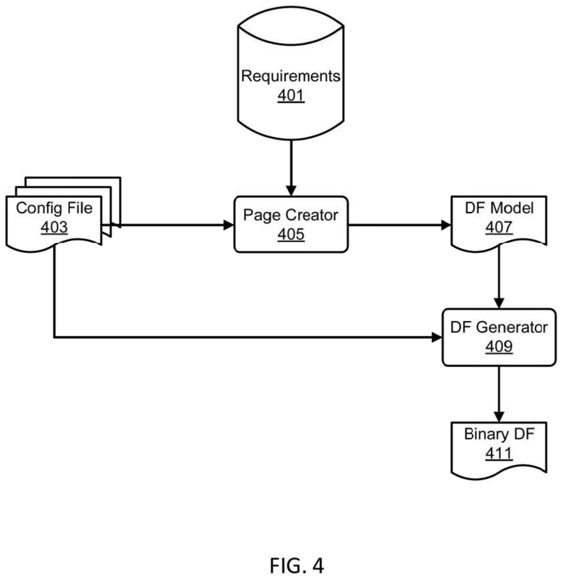

FIG. 4 is a block diagram illustrating the generation of binary definition files 411 from a definition file model 407. As illustrated, a page creator 405 may be employed to create a DF model 407. As used herein, a page creator 405 may be an application that receives requirements and information stored in configuration files 403 and generates a DF model 407. For example, the requirements 401 may include high-level or system-level requirements in a similar manner as described above with respect to the defined requirements 101, and the configuration file 403 may include data that configures the page creator 405 for generation of the DF model 407. The DF model 407 may then be provided to a DF generator 409 that receives the DF model 407 and generates binary definition files 411. The DF generator 409, as used herein, refers to a qualified tool or an unqualified tool that generates binary DF 411 from the DF model 407. The binary definition files 411 are then used to evaluate the coverage metrics for the DF model to demonstrate compliance of the DF models with the requirements 401. However, as the binary definition files 411 are generated using the DF generator 409, there is a need to ensure that the DF model 407 used by the DF generator 409 provides evidence for the justification of requirements-based testing and that model coverage is provided through the qualified tools.

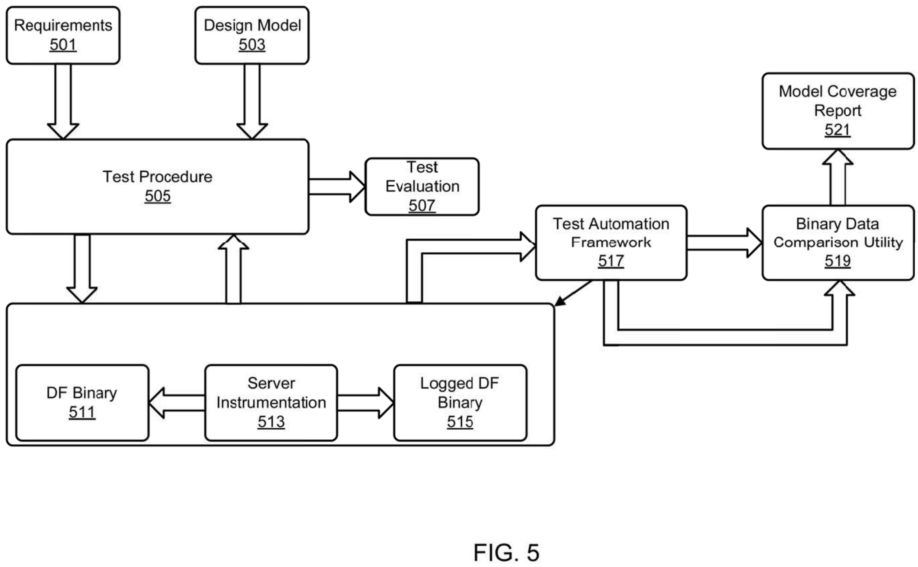

FIG. 5 is a flow diagram illustrating an approach for evaluating model coverage of UA DF models that provides justification for model coverage through qualified tools. As illustrated, the approach includes requirements 501, a design model 503, a test procedure 505, test evaluation 507, and a DF binary 511 that are functionally similar to the defined requirements 101, design model 103, test procedure 105, test evaluation 107, and the DF binary 111 in FIG. 1. In addition, the approach includes a test automation framework 517 that sends commands to server instrumentation 513 to create a logged DF binary 515. The server instrumentation 513 may be executed in a simulated environment or in a target environment. For example, the server instrumentation 513 may generate a logged DF Binary 515 on a computing system that simulates a user application or on a computing system that is intended to execute the user application during deployed operation. In some implementations, the server instrumentation 513 may be executed on both a simulated and target environment and produce separate logged DF binary 515 for each environment. After execution on both the simulated and target environments, the server instrumentation 513 or other computing system may merge the logged DF binary 515 from the simulated environment and the target environment.

In addition to providing test results back to the test procedure 505 in a similar manner as the test results provided to the test procedure 105 by the server instrumentation 113 in FIG. 1, the server instrumentation 513 also provides the DF binary 511 and the logged DF binary 515 to the test automation framework 517 for additional comparison and generation through a binary data comparison utility 519. Further, the binary data comparison utility 519 may generate a model coverage report 521 that provides evidence for the justification of the model coverage at both the model level and the binary level in a manner that justifies model coverage provided through qualified and unqualified tools according to industry standards. In some implementations, the binary data comparison utility 519 is executed as an offline comparison, where the test automation framework 517 is performed by a separate computing system from the computing system executing the server instrumentation 513. Alternatively, the computing system executing the server instrumentation 513 also performs the tasks associated with the test automation framework 517, including the binary data comparison utility 519, which provides the model coverage report 521.

In certain embodiments, the server instrumentation 513 may be an instrumented processor that includes one or more processors that execute an executable file or other component, such as a static library, a dynamic link library, a shared object running on multiple devices, and the like. The processor may be a single processor or a device that includes combinations of general-purpose processors, multi-core processors, multiple processors, dedicated circuitry, and the like. The processors may also operate on a personal computer, a handheld device, a server, or other computational device. Also, the computational device may be part of a desktop, laptop, mobile processing system, system-on-chip, and the like. The functions performed by the processors may be implemented using software, firmware, hardware, or any appropriate combination thereof. The processors and other computational devices may be supplemented by, or incorporated in, specially-designed application-specific integrated circuits (ASICs) or field programmable gate arrays (FPGAs). The processors and other computational devices can also include or function with software programs, firmware, or other computer-readable instructions for performing various process tasks, calculations, and control functions used in the present methods and systems.

The present methods may be implemented by computer-executable instructions, such as program modules or components executed by the processor or other computational devices. Generally, program modules include routines, programs, objects, data components, data structures, algorithms, and the like, which perform particular tasks or implement particular abstract data types.

In addition to the processors, the processors may also interface with a memory that stores the DF binary 511 and the logged DF binary 515. The memory may be any suitable computer-readable storage media that includes, for example, non-volatile memory devices, including semiconductor memory devices such as random access memory (RAM), read-only memory (ROM), electrically erasable programmable ROM (EEPROM), or flash memory devices; magnetic disks such as internal hard disks or removable disks; optical storage devices such as compact discs (CDs), digital versatile discs (DVDs), Blu-ray discs, or other media that can carry or store desired program code as computer-executable instructions or data structures.

Further, the memory may be distributed across one or more devices, replicated on different devices, and communicated between devices for storage in memory associated with the different devices. For example, the server instrumentation 513 may operate on the DF binary 511 on a first device and provide the DF binary 511 and the logged DF binary 515 to the test automation framework 517 that may be operating on a different device. The server instrumentation 513 may provide the DF binary 511 and the logged DF binary 515 to the different devices through TCP communications, through an Ethernet connection, storing information within a shared memory, or other communication method. When the DF binary 511 and the logged DF binary 515 are available to the test automation framework 517, the binary data comparison utility 519 may operate on the DF binary 511 and the logged DF binary 515 to generate the model coverage report 521.

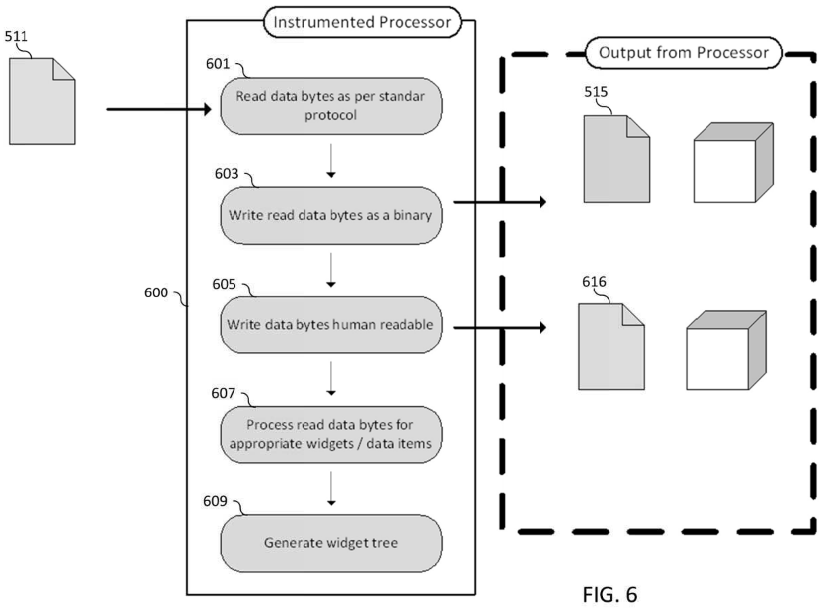

FIG. 6 is a flowchart diagram illustrating a method 600 performed by the server instrumentation 513 to generate the logged DF binary 515 from the original DF binary 511. The method 600 performed by the server instrumentation 513 (also referred to herein as an instrumented processor) receives the DF binary 511 as an input and proceeds at 601, where data bytes are read according to standard file reading protocols. For example, the server instrumentation 513 may access data within the DF binary 511. The method 600 then proceeds at 603, where the read data bytes are written to memory as an output from the server instrumentation 513. For example, the server instrumentation 513 may write the read data bytes in the accessed data from the DF binary 511 as binary data within the logged DF binary 515. The logged DF binary 515 may be provided as an output as persistent or content within a memory block. Additionally, the method 600 proceeds at 605, where the data bytes read from the DF binary 511 are written in human-readable form in a memory block or within a persistent file. For example, the server instrumentation 513 records a corresponding traversal in a human-readable format 616 in a separate file or memory block or both a file and a memory block. Further, the method 600 proceeds at 607, where the read data bytes are processed for appropriate widgets and data items. Additionally, the method 600 proceeds at 609, where the server instrumentation 513 generates a widget tree from the processing for the appropriate widgets and data items.

Accordingly, the server instrumentation 513 reads the DF binary 511 and outputs two files or data stored in memory blocks. In particular, the server instrumentation 513 provides a log of the binary data read from the DF binary 511 as the logged DF binary 515. The logged DF binary 515 contains a log of the data in the DF binary 511 as it is read and processed from the DF binary 511. Further, as the server instrumentation 513 accesses the binary data in the DF binary 511, the server instrumentation 513 converts the accessed data into a human-readable format and stores the human-readable data in combination with the logged DF binary 515. Thus, the logged DF binary 515 and accompanying human-readable data provide a record of the traversal of the DF binary 511 by the server instrumentation 513.

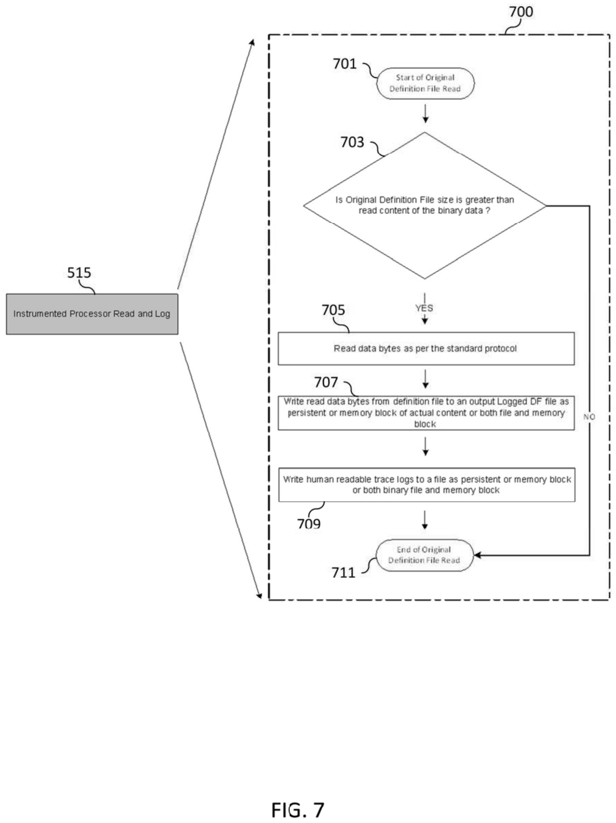

FIG. 7 is a flowchart diagram illustrating a method 700 detailing the creation of the logged DF binary 515 and accompanying human-readable data by the server instrumentation 513. For example, the method 700 proceeds at 701, where the server instrumentation 513 begins reading the DF binary 511 at the start of the DF binary 511. The server instrumentation 513 proceeds at 703, where the server instrumentation 513 determines whether the file size of the DF binary 511 is greater than the read content of binary data. If the file size of the DF binary 511 is not greater than the read content of the binary data, the server instrumentation 513 proceeds to the end of the original DF binary 511 and stops reading the DF binary 511. However, if the file size of the DF binary 511 is greater than the read content of the binary data, the method 700 proceeds at 705.

When the method 700 proceeds at 705, data bytes are read according to standard protocols. For example, the server instrumentation 513 may read the data bytes in the DF binary 511. As the server instrumentation 513 reads the data bytes in the DF binary 511, the method 700 proceeds at 707, where read data bytes from a definition file are written to a logged DF file. Further, the read data bytes are written to the output logged DF file as a persistent memory block containing the actual content of the DF binary 511 as they are read from the DF binary 511. Further, the method 700 proceeds at 709, where human-readable trace logs are written to a file. For example, as the server instrumentation 513 reads the data bytes from the DF binary 511, the server instrumentation 513 converts the binary data as it is read into a human-readable form and then saves the human-readable data in persistent or other type of memory block. When the server instrumentation 513 has created the human-readable trace log and the read binary data for the file with the DF binary 511, the method 700 proceeds at 711 with the end of the original definition file read.

In certain embodiments, the server instrumentation 513 produces the logged DF binary 515 and the human-readable format 616 for consumption by other processes running on the same target or processor within the same partition in memory. Additionally, the logged DF binary 515 and human-readable format 616 may be used by the same target or processor within a different partition in memory. Further, the logged DF binary 515 and human-readable format 616 may be sent outside the target processor for use by other processors. For example, the logged DF binary 515 and human-readable format 616 may be stored in cloud storage or transmitted directly to another processor executing other independent processes.

In additional embodiments, where the DF binary is generated by a non-qualified tool, the server instrumentation 513 may generate the human-readable format as a logged textual file, where the logged textual file can be used to compare against textual files containing canonical textual information. The canonical textual information may contain expected log data, manually generated data, and reviewed data.

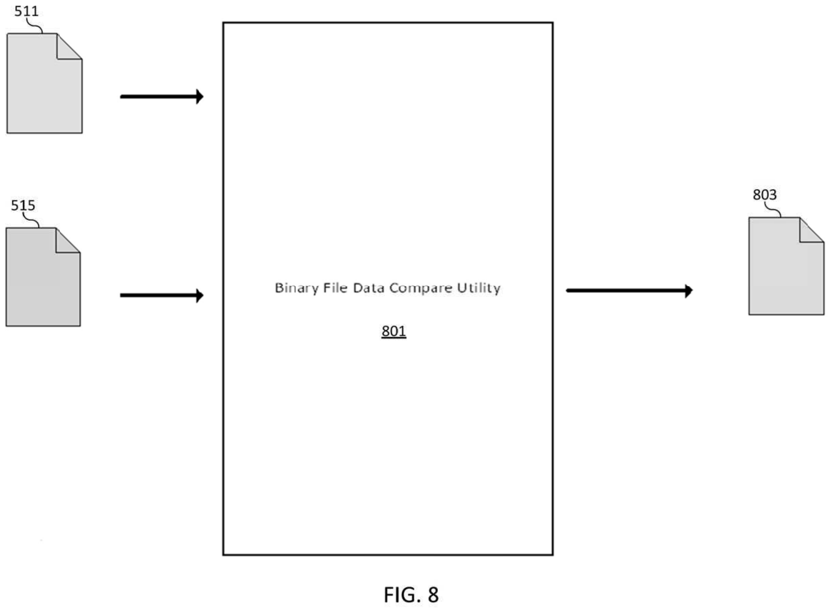

FIG. 8 is a block diagram illustrating a binary file data compare utility 801. The binary file data compare utility 801 is configured to compare different binary files to evaluate the coverage of the input binary files. Further, the binary file data compare utility 801 generates a coverage report 803 representing the coverage offered by one of the binary files. For example, the binary file data compare utility 801 may receive the DF binary 511 and the logged DF binary file 515 and generate a coverage report 803 representing the coverage of the logged DF binary file 515 for the DF binary 511. In some implementations, the binary file data compare utility 801 may be executed by the server instrumentation 513 or by another processor or computing system that is able to access the logged DF binary file 515, DF binary 511, and human-readable format 616. The generated coverage report 803 may then allow the evaluation of the coverage of the definition file and the tools that generated the definition file.

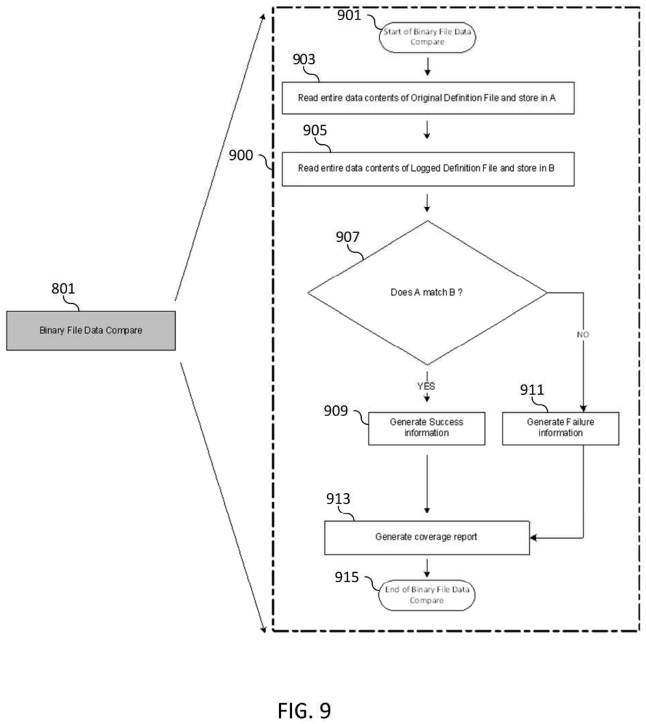

FIG. 9 is a flowchart diagram of an exemplary method 900 performed by the binary file data compare utility 801, where the binary file data compare utility 801 performs the method 900 to generate a coverage report where the logged DF binary file 515 is stored as a file. In particular, the method 900 proceeds at a 901, where the binary file data compare utility 801 begins performing the comparison. The method 900 then proceeds at 903, where the binary file data compare utility 801 reads the entire date contents of the original definition file and stores the contents in a memory space A. Additionally, the method 900 proceeds at 905 where the binary file data compare utility 801 reads the entire data contents of the logged definition file in a memory space B.

After storing the data from the original DF binary and the logged DF binary in the different memory spaces, the method may proceed to 907, where the binary file data compare utility 801 determines whether the data stored in memory space A matches the data stored in memory space B. If the data stored in memory spaces A and B matches, then the method 900 proceeds to 909, where the binary file data compare utility 801 generates success information. The success information may include an indication of success, a mapping of the memory spaces in A to the corresponding memory spaces in B, and other information related to the successful matching of the data stored in memory spaces A and B. In some implementations, the binary file data compare utility 801 may use the human-readable format 616 to aid a verification team in understanding the generated coverage report. For example, the binary file data compare utility 801 may associate portions of the human-readable format 616 with associated portions of at least one of the DF binary 511 and the logged DF binary file 515.

In certain embodiments, when the binary file data compare utility 801 determines that the data stored in memory spaces A and B does not match each other, the method proceeds at 911, where the binary file data compare 801 generates failure information. The failure information may include information related to mismatches between the memory spaces A and B. For example, the failure information may include information about which portions of memory spaces A and B matched, which portions did not match, and other information that can help determine why the different memory spaces failed to match one another. In some implementations, the failure information may identify elements in a design model that are not covered by the binary model file. Further, in some implementations, the binary file data compare utility 801 may use the human-readable format 616 to aid a verification team in understanding the failure information in a generated coverage report. For example, the binary file data compare utility 801 may associate portions of the human-readable format 616 with associated portions of at least one of the DF binary 511 and the logged DF binary file 515. After generating either of the success or failure information, the method 900 proceeds at 913, where a coverage report 803 is generated. For example, the binary file data compare utility 801 may generate a coverage report 803 that conveys the success information and any failure information such that the coverage of the DF binary 511 may be verified. After generating the coverage report 803, the method 900 proceeds at 915, where the binary file data compare ends.

In certain embodiments, where the DF binary 511 was generated using a non-qualified tool, the method 900 may include processing additional data. For example, the method 900 may additionally proceed at 903 by reading the entire contents of a stored canonical textual file, where the canonical textual file includes expected log data, manually generated data, and reviewed data. Further, the method 900 may additionally proceed at 905 by reading the entire contents of a stored logged textual file. For example, the logged textual file may include the human-readable format 616 generated by the server instrumentation 513. After acquiring both the logged textual file and the canonical textual file, the method 900 may additionally proceed at 907, where it is determined whether the logged textual file matches the canonical textual file.

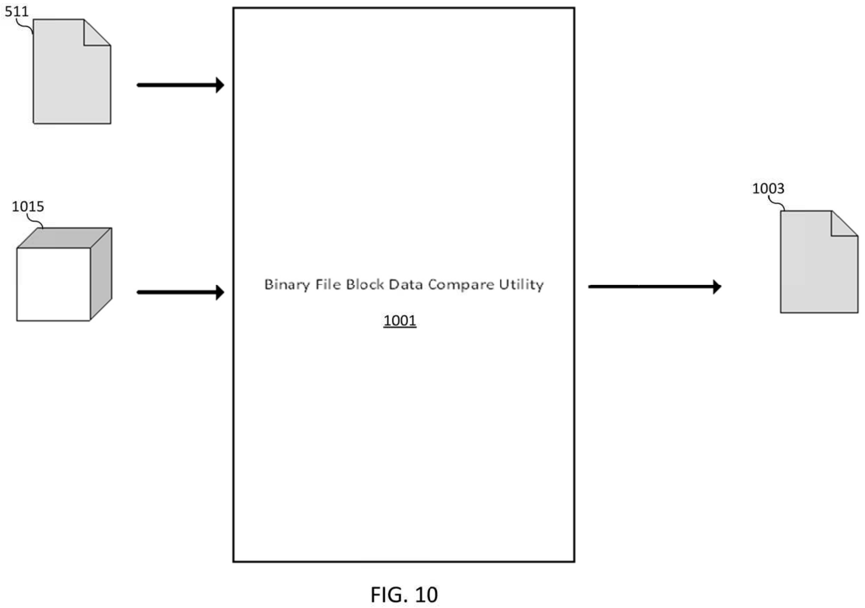

FIG. 10 is a block diagram illustrating a binary file block data compare utility 1001. The binary file block data compare utility 1001 is configured to compare different blocks of data to evaluate the coverage of the input binary files. Further, the binary file block data compare utility 1001 generates a coverage report 1003 representing the coverage offered by one of the binary files. For example, the binary file block data compare utility 1001 may receive the DF binary 511 and the logged DF binary memory block 1015 and generate a coverage report 1003 representing the coverage of the logged DF binary memory block 1015 for the DF binary 511. In some implementations, the binary file block data compare utility 1001 may be executed by the server instrumentation 513 or by another processor or computing system that is able to access the logged DF binary memory block 1015, DF binary 511, and human-readable format 616. The generated coverage report 1003 may then allow the evaluation of the coverage of the definition file and the tools that generated the definition file.

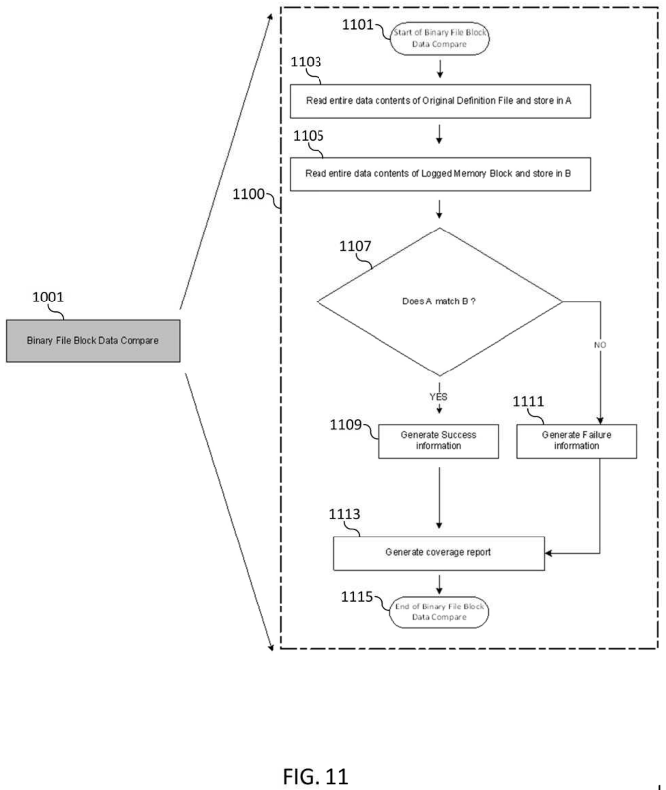

FIG. 11 is a flowchart diagram of an exemplary method 1100 performed by the binary file block data compare utility 1001, where the binary file block data compare utility 1001 performs the method 1100 to generate a coverage report 1003 where the logged DF binary memory block 1015 is stored as a memory block. In particular, the method 1100 proceeds at 1101, where the binary file block data compare utility 1001 begins performing the comparison. The method 1100 then proceeds at 1103, where the binary file block data compare utility 1001 reads the entire data contents of the original definition file and stores the contents in a memory space A. Additionally, the method 1100 proceeds at 1105, where the binary file block data compare utility 1001 reads the entire data contents of the logged DF binary memory block 1015 in a memory space B.

After storing the data from the original DF binary 511 and the logged DF binary memory block 1015 in the different memory spaces, the method may proceed to 1107, where the binary file block data compare utility 1001 determines whether the data stored in memory space A matches the data stored in memory space B. If the data stored in memory spaces A and B matches, then the method 1100 proceeds to 1109, where the binary file block data compare utility 1001 generates success information. The success information may include an indication of success, a mapping of the memory spaces in A to the corresponding memory spaces in B, and other information related to the successful matching of the data stored in memory spaces A and B. In some implementations, the binary file block data compare utility 1001 may use the human-readable format 616 to aid a verification team in understanding the generated coverage report 1003. For example, the binary file block data compare utility 1001 may associate portions of the human-readable format 616 with associated portions of at least one of the DF binary 511 and the logged DF binary memory block 1015.

In certain embodiments, when the binary file block data compare utility 1001 determines that the data stored in memory spaces A and B does not match each other, the method proceeds at 1111, where the binary file block data compare 1001 generates failure information. The failure information may include information related to mismatches between the memory spaces A and B. For example, the failure information may include information about which portions of memory spaces A and B matched, which portions did not match, and other information that can help determine why the different memory spaces failed to match one another. Further, in some implementations, the binary file block data compare utility 1001 may use the human-readable format 616 to aid a verification team in understanding the failure information in a generated coverage report 1003. For example, the binary file block data compare utility 1001 may associate portions of the human-readable format 616 with associated portions of at least one of the DF binary 511 and the logged DF binary memory block 1015. After generating either of the success or failure information, the method 1100 proceeds at 1113 where a coverage report 1003 is generated. For example, the binary file block data compare utility 1001 may generate a coverage report 1003 that conveys the success information and any failure information such that the coverage of the DF binary 511 may be verified. After generating the coverage report 1003, the method 900 proceeds at 915, where the binary file block data compare 801 terminates.

In certain embodiments, where the DF binary 511 was generated using a non-qualified tool, the method 1100 may include processing additional data. For example, the method 1100 may additionally proceed at 1103 by reading the entire contents of a stored canonical textual file, where the canonical textual file includes expected log data, manually generated data, and reviewed data. Further, the method 1100 may additionally proceed at 1105 by reading the entire contents of a stored logged textual file, where the stored logged textual file may be stored in a memory block. For example, the logged textual file may include the human-readable format 616 and the logged DF Binary 515 generated by the server instrumentation 513. After acquiring both the logged textual file and the canonical textual file, the method 1100 may additionally proceed at 1107, where it is determined whether the logged textual file matches the canonical textual file.

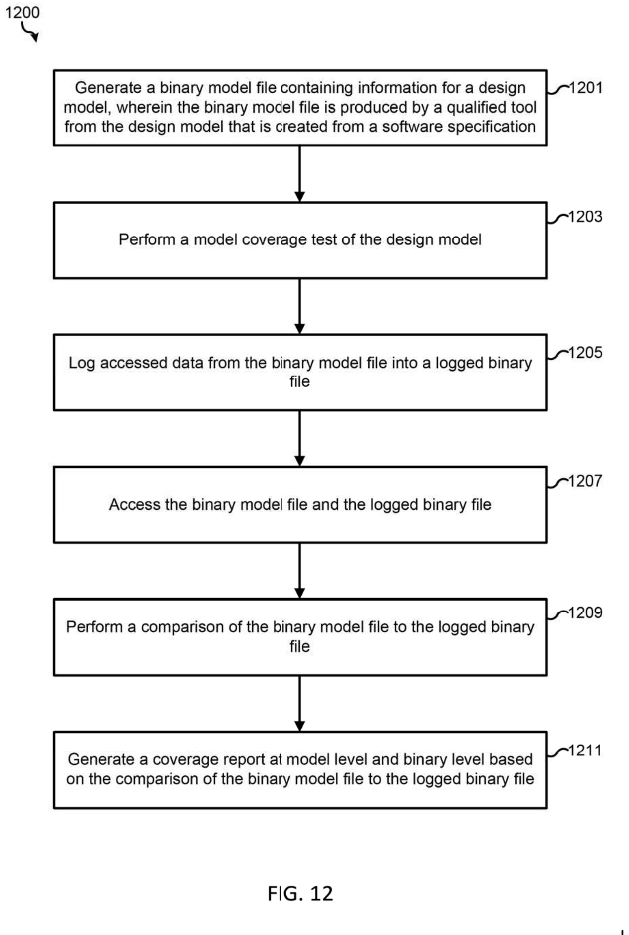

FIG. 12 is a flowchart diagram of a method 1200 for performing model coverage analysis. The method 1200 proceeds at 1201, where a binary model file containing information for a design model is generated. For example, the binary model file is produced by a qualified tool from the design model that is created from a software specification. Further, the method 1200 proceeds at 1203, where a model coverage test of the design model is performed. Additionally, the method 1200 proceeds at 1205, where accessed data from the binary model file are logged into a logged binary file.

In certain embodiments, the method 1200 proceeds at 1207, where the binary model file and the logged binary file is accessed. Moreover, the method 1200 proceeds at 1209, where a comparison of the binary model file to the logged binary file is performed. Further, the method 1200 proceeds at 1211, where a coverage report is generated at model level and binary level based on the comparison of the binary model file to the logged binary file.

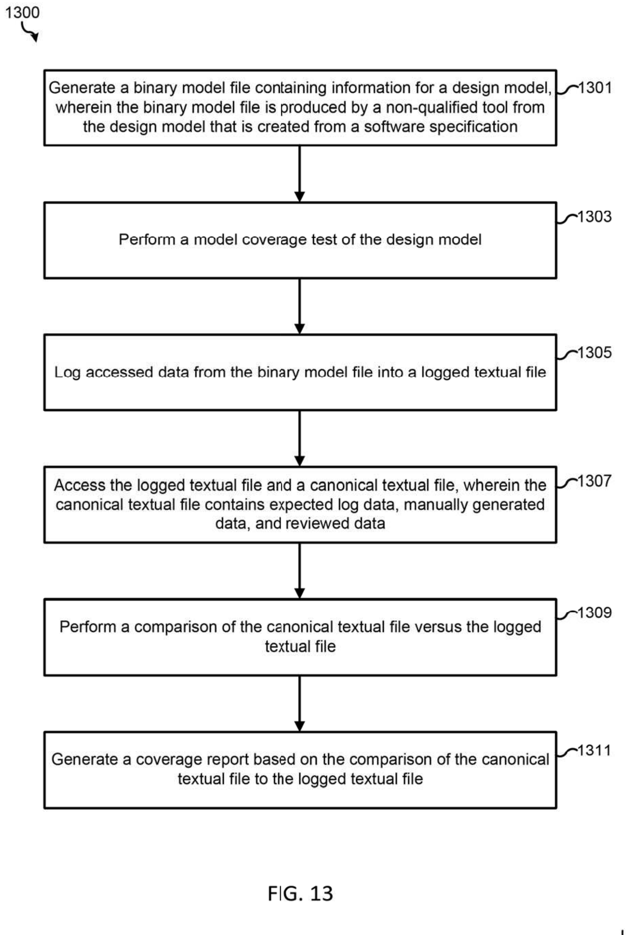

FIG. 13 is a flowchart diagram of a further method 1300 for performing model coverage analysis. The method 1300 proceeds at 1301, where a binary model file containing information for a design model is generated. For example, the binary model file is produced by a non-qualified tool from the design model that is created from a software specification. Further, the method 1300 proceeds at 1303, where a model coverage test of the design model is performed. Additionally, the method 1300 proceeds at 1305, where accessed data from the binary model file are logged into a logged textual file.

In certain embodiments, the method 1300 proceeds at 1307, where the logged textual file and a canonical textual file are accessed, wherein the canonical textual file contains expected log data, manually generated data, and reviewed data. Moreover, the method 1300 proceeds at 1309, where a comparison of the canonical textual file versus the logged textual file is performed. Further, the method 1300 proceeds at 1311, where a coverage report is generated based on the comparison of the canonical textual file to the logged textual file.

### Example Embodiments

Example 1 includes a method comprising: generating a binary model file containing information for a design model, wherein the binary model file is produced by a qualified tool from the design model that is created from a software specification; performing a model coverage test of the design model; logging accessed data from the binary model file into a logged binary file; accessing the binary model file and the logged binary file; performing a comparison of the binary model file to the logged binary file; and generating a coverage report at model level and binary level based on the comparison of the binary model file to the logged binary file.

Example 2 includes the method of Example 1, wherein logging the accessed data into the logged binary file further comprises generating a human-readable format for the accessed data.

Example 3 includes the method of Example 2, wherein the coverage report comprises the human-readable format.

Example 4 includes the method of any of Examples 1-3, wherein logging the accessed data from the binary model file into the logged binary file comprises logging the accessed data in the binary model file in at least one of a: a data block of memory; and a data file.

Example 5 includes the method of any of Examples 1-4, further comprising providing at least one of the coverage report, the logged binary file, and the binary model file for offline comparison.

Example 6 includes the method of any of Examples 1-5, wherein the coverage report identifies elements in the design model that are not covered by the binary model file.

Example 7 includes the method of any of Examples 1-6, wherein logging the accessed data from the binary model file into the logged binary file further comprises logging the accessed data on at least one of a simulated environment and a target environment.

Example 8 includes the method of Example 7, wherein logging the accessed data from the binary model file into the logged binary file further comprises merging logged data from the simulated environment and the target environment.

Example 9 includes a method comprising: generating a binary model file containing information for a design model, wherein the binary model file is produced by a non-qualified tool from the design model that is created from a software specification; performing a model coverage test of the design model; logging accessed data from the binary model file into a logged textual file; accessing the logged textual file and a canonical textual file, wherein the canonical textual file contains expected log data, manually generated data, and reviewed data; performing a comparison of the canonical textual file versus the logged textual file; and generating a coverage report based on the comparison of the canonical textual file to the logged textual file.

Example 10 includes the method of Example 9, wherein logging the accessed data from the binary model file into the logged textual file comprises logging the accessed data in the binary model file in at least one of a: a data block of memory; and a data file.

Example 11 includes the method of any of Examples 9-10, further comprising saving the canonical textual file and the logged textual file for performing an offline comparison to generate the coverage report.

Example 12 includes the method of any of Examples 9-11, wherein the coverage report identifies elements in the design model that are not covered by the binary model file.

Example 13 includes the method of any of Examples 9-12, wherein logging the accessed data from the binary model file into the logged textual file further comprises logging the accessed data on at least one of a simulated environment and a target environment.

Example 14 includes the method of Example 13, wherein logging the accessed data from the binary model file into the logged textual file further comprises merging logged data from the simulated environment and the target environment.

Example 15 includes a system comprising: one or more memory devices; and one or more processors, wherein the one or more processors are configured to: execute a qualified tool, wherein the qualified tool is configured to generate a binary model file from a design model; perform a model coverage test of the design model; log accessed data from the binary model file into a logged binary file; access the binary model file and the logged binary file; perform a comparison of the binary model file to the logged binary file; and generate a coverage report based on the comparison of the binary model file to the logged binary file.

Example 16 includes the system of Example 15, wherein the one or more processors are configured to log the accessed data into the logged binary file by generating a human-readable format for the accessed data.

Example 17 includes the system of any of Examples 15-16, wherein the one or more processors are configured to log the accessed data from the binary model file into the logged binary file by logging the accessed data in the binary model file in at least one of a: a data block of memory; and a data file.

Example 18 includes the system of any of Examples 15-17, wherein the one or more processors are further configured to provide at least one of the coverage report, the logged binary file, and the binary model file for offline comparison.

Example 19 includes the system of any of Examples 15-18, wherein the coverage report identifies elements in the design model that are not covered by the binary model file.

Example 20 includes the system of any of Examples 15-19, wherein the one or more processors are further configured to log the accessed data from the binary model file into the logged binary file by logging the accessed data on at least one of a simulated environment and a target environment.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A method comprising:
generating a binary model file (511) containing information for a design model (503), wherein the binary model file (511) is produced by a qualified tool from the design model (503) that is created from a software specification;
performing a model coverage test of the design model (503);
logging accessed data from the binary model file (511) into a logged binary file (515);
accessing the binary model file (511) and the logged binary file (515);
performing a comparison of the binary model file (511) to the logged binary file (515); and
generating a coverage report (521) at model level and binary level based on the comparison of the binary model file (511) to the logged binary file (515).

2. The method of claim 1, wherein logging the accessed data into the logged binary file (515) further comprises generating a human-readable format for the accessed data, wherein the coverage report (521) comprises the human-readable format.

3. The method of claim 1, wherein logging the accessed data from the binary model file (511) into the logged binary file (515) comprises logging the accessed data in the binary model file (511) in at least one of a:
a data block of memory; and
a data file.

4. The method of claim 1, further comprising providing at least one of the coverage report (521), the logged binary file (515), and the binary model file (511) for offline comparison.

5. The method of claim 1, wherein logging the accessed data from the binary model file (511) into the logged binary file (515) further comprises logging the accessed data on at least one of a simulated environment and a target environment, wherein logging the accessed data from the binary model file (511) into the logged binary file (515) further comprises merging logged data from the simulated environment and the target environment.

6. A method comprising:
generating a binary model file (511) containing information for a design model (503), wherein the binary model file (511) is produced by a non-qualified tool from the design model (503) that is created from a software specification;
performing a model coverage test of the design model (503);
logging accessed data from the binary model file (511) into a logged textual file;
accessing the logged textual file and a canonical textual file, wherein the canonical textual file contains expected log data, manually generated data, and reviewed data;
performing a comparison of the canonical textual file versus the logged textual file; and
generating a coverage report (521) based on the comparison of the canonical textual file to the logged textual file.

7. The method of claim 6, wherein logging the accessed data from the binary model file (511) into the logged textual file comprises logging the accessed data in the binary model file (511) in at least one of a:
a data block of memory; and
a data file.

8. The method of claim 6, further comprising saving the canonical textual file and the logged textual file for performing an offline comparison to generate the coverage report (521).

9. The method of claim 6, wherein the coverage report (521) identifies elements in the design model (503) that are not covered by the binary model file (511).

10. The method of claim 6, wherein logging the accessed data from the binary model file (511) into the logged textual file further comprises logging the accessed data on at least one of a simulated environment and a target environment, wherein logging the accessed data from the binary model file (511) into the logged textual file further comprises merging logged data from the simulated environment and the target environment.
